# EUROPÄISCHE PATENTSCHRIFT

(11) **EP 3 696 056 B1**
(45) Veröffentlichungstag und Bekanntmachung des Hinweises auf die Patenterteilung: **21.06.2023**
(21) Anmeldenummer: 20151092.2
(22) Anmeldetag: 10.01.2020
(51) Int. Cl.: B62D 21/12, B62D 27/06, B62D 63/02

(54) **FAHRZEUG-CHASSIS-MODUL MIT FAHRZEUG-ACHSE UND ANSCHLUSSKNOTEN**
VEHICLE CHASSIS MODULE WITH A VEHICLE AXIS AND CONNECTING NODES
MODULE DE CHÂSSIS DE VÉHICULE POURVU D'ESSIEU DE VÉHICULE ET DE NOEUD DE RACCORDEMENT

(30) Priorität: 15.02.2019 DE 102019103863
(43) Veröffentlichungstag der Anmeldung: 19.08.2020
(73) Patentinhaber: MAN Truck & Bus SE, 80995 München (DE)
(72) Erfinder: Sattler, Steve, 80992 München (DE); Hintereder, Jürgen, 83313 Siegsdorf (DE); Drescher, Benjamin, 86932 Pürgen (DE); Hörmann, Robert, 85461 Bockhorn (DE)
(74) Vertreter: v. Bezold & Partner Patentanwälte - PartG mbB

(56) Entgegenhaltungen:
- EP-A1- 2 554 458
- EP-A1- 3 239 021
- EP-A1- 3 424 803
- EP-B1- 0 591 715
- WO-A1-01/62576
- CN-A- 103 754 265
- DE-A1- 10 150 052
- DE-A1- 19 926 607
- DE-A1-102008 045 005
- DE-A1-102012 013 901
- US-B1- 6 199 894
- US-B1- 7 441 809

## Beschreibung

Die Erfindung betrifft eine Fahrzeugkonstruktion, insbesondere ein Nutzfahrzeug-Chassis, mit zumindest einer Fahrzeug-Achsen-Tragstruktur, die ein Fahrzeug-Chassis-Modul bildet und eine Fahrzeug-Achse. Die Fahrzeugkonstruktion kann z. B. 2-achsig oder 3-achsig ausgebildet sein.

Zum allgemeinen Stand der Technik kann zunächst auf die WO 01/62576 A1, die CN 103 754 265 A, die EP 3 239 021 A1 und die DE 199 26 607 A1 verwiesen werden, aus denen bereits Fahrzeugkonstruktionen mit einer Fahrzeug-Achsen-Tragstruktur bekannt sind. Die WO 01/62576 A1 offenbart eine Fahrzeugkonstruktion gemäß dem Oberbegriff des Anspruchs 1.

Im Stand der Technik sind sogenannte leiterrahmenförmige Nutzfahrzeug-Chassis mit zwei in Querrichtung voneinander beabstandeten einstückig-integral durchgängigen Längsträgern bekannt.

Derartige Nutzfahrzeug-Chassis werden in Abhängigkeit der Fahrzeuganwendung (z. B. Sattelzugmaschine, Kipper-Lastkraftwagen, etc.) konstruiert und weisen deshalb in Abhängigkeit der Fahrzeuganwendung z. B. unterschiedliche Längen, Breiten, Stärken, etc. auf. An die Nutzfahrzeug-Chassis sind ebenfalls in Abhängigkeit der Fahrzeuganwendung Funktionskomponenten (z. B. verschiedene Tanks, Motoren, Batterien, etc.) anmontiert. Einmal definiert und produziert bleibt das jeweilige Nutzfahrzeug-Chassis mitsamt seinen anmontierten Funktionskomponenten im Laufe der Fahrzeuglebensdauer üblicherweise unverändert bestehen. Nachträgliche Veränderungen sind, wenn überhaupt, nur mit erheblichem Umbau- und Anpassungsaufwand zu realisieren und führen zugleich meist zu einem Eingriff in die Fahrzeugstatik.

Die Anordnung der Funktionskomponenten am Nutzfahrzeug-Chassis wird vom zur Verfügung stehenden Raum beeinflusst. Dadurch ergeben sich Zwänge hinsichtlich der Anordnung von insbesondere großen Funktionskomponenten, deren technische Lösung meist in einer Stückelung der großen Funktionskomponenten besteht, z. B. die Stückelung eines großen Tanks in mehrere kleinere Tanks, wozu oftmals auch varianztreibende Adapterlösung erforderlich sind.

Eine Aufgabe der Erfindung ist es, eine bessere und/oder alternative Fahrzeugkonstruktion zu schaffen, insbesondere mit einer geeigneten Tragstruktur für eine Fahrzeug-Achse und vorzugsweise aller relevanten Fahrwerkskomponenten.

Diese Aufgabe wird mit den Merkmalen des Hauptanspruchs gelöst. Vorteilhafte Weiterbildungen sind in den Unteransprüchen offenbart oder ergeben sich aus der folgenden Beschreibung bevorzugter Ausführungsformen der Erfindung.

Die Erfindung schafft eine Fahrzeugkonstruktion, vorzugsweise ein in seiner Längsrichtung z. B. tragstrukturell und/oder funktionell modular aufgebautes Fahrzeug-Chassis, insbesondere Nutzfahrzeug-Chassis, z. B. Lastkraftwagen- oder Transporter-Chassis.

Die Fahrzeugkonstruktion umfasst zumindest eine Fahrzeug-Achsen-Tragstruktur, die ein vorzugsweise modular austauschbares Fahrzeug-Chassis-Modul bildet und eine Fahrzeug-Achse aufweist. Die Fahrzeug-Achse ist vorzugsweise eine hintere Fahrzeug-Achse, z. B. eine hintere Triebachse oder eine hintere Laufachse (z. B. Vorlauf- oder Nachlaufachse). Die Fahrzeugkonstruktion kann z. B. eine Vielzahl von (zweckmäßig im Wesentlichen baugleichen und/oder unterschiedlichen) Tragstrukturen aufweisen, die jeweils ein z. B. modular austauschbares Fahrzeug-Chassis-Modul bilden können.

Die Fahrzeugkonstruktion zeichnet sich vor allem dadurch aus, dass die Fahrzeug-Achsen-Tragstruktur zumindest zwei vordere Anschlussknoten beziehungsweise zumindest zwei hintere Anschlussknoten aufweist, wobei die Fahrzeug-Achsen-Tragstruktur vier oberen Anschlussknoten umfasst.

Die Fahrzeug-Achsen-Tragstruktur kann z. B. vier vordere Anschlussknoten und/oder vier hintere Anschlussknoten aufweisen.

Es ist möglich, dass die vier vorderen Anschlussknoten und die vier hinteren Anschlussknoten im Wesentlichen Eckpunkte eines insbesondere fiktiven Quaders bilden.

Die acht Anschlussknoten, also insbesondere die vier vorderen Anschlussknoten und die vier hinteren Anschlussknoten, sind im Wesentlichen gleich weit von einem Raummittelpunkt (vorzugsweise eines Quaders) entfernt.

Die Fahrzeug-Achse relativ zur Längsrichtung der Fahrzeugkonstruktion im Wesentlichen mittig oder außermittig angeordnet sein.

Es ist möglich, dass die Fahrzeug-Achse sich innerhalb der Fahrzeug-Achsen-Tragstruktur erstreckt und z. B. im Wesentlichen in Querrichtung der Fahrzeugkonstruktion aus der Fahrzeug-Achsen-Tragstruktur hinaus ragt.

Es ist möglich, dass die zumindest zwei, vorzugsweise vier, vorderen Anschlussknoten und die zumindest zwei, vorzugsweise vier, hinteren Anschlussknoten im Wesentlichen baugleich ausgebildet sind und/oder die Fahrzeug-Achsen-Tragstruktur in Höhenrichtung der Fahrzeugkonstruktion um 180° gedreht an oder in die Fahrzeugkonstruktion montiert werden kann.

Die Fahrzeug-Achsen-Tragstruktur weist zumindest eine der folgenden Funktionskomponenten auf: eine Lifteinrichtung zum Anheben und Absenken der Fahrzeug-Achse, zumindest eine Rollstabilisierung, und/oder ein Bauteil mit integrierter Längsführungs- Querführungs- und Rollstabilisierungs-Funktion.

Ferner kann die Fahrzeug-Achsen-Tragstruktur zumindest eine der folgenden Funktionskomponenten, insbesondere Fahrwerkskomponenten, aufweisen: eine Längs- und Querführung, eine Federungs- und/oder Dämpfungseinrichtung, und/oder eine Längsführung.

Z. B. kann zumindest eine Funktionskomponente an die Fahrzeug-Achsen-Tragstruktur montiert sein und/oder z. B. vollständig oder zumindest großteils innerhalb der Fahrzeug-Achsen-Tragstruktur (vorzugsweise innerhalb des Quaders) angeordnet sein.

Die zumindest eine Funktionskomponente stellt insbesondere ein Fahrwerkskomponente dar.

Die Fahrzeug-Achsen-Tragstruktur kann zumindest zwei Längsträgersegmente (z. B. eine Blech-, Guss, Schmiede- oder Profilkonstruktion oder eine Kombination hiervon) aufweisen, die im Wesentlichen in Querrichtung der Fahrzeugkonstruktion voneinander beabstandet sind und/oder jeweils eine vordere Versteifungsstruktur und eine hintere Versteifungsstruktur aufweisen. Die Versteifungsstrukturen können jeweils vorzugsweise im Wesentlichen in Längsrichtung der Fahrzeugkonstruktion wirken und/oder sind jeweils als z. B. Diagonalversteifung ausgeführt.

Die Fahrzeug-Achsen-Tragstruktur kann z. B. zwei obere und vorzugsweise zwei untere Längsträgersegmente aufweisen, die im Wesentlichen in Querrichtung der Fahrzeugkonstruktion voneinander beabstandet sein können.

Es ist möglich, dass die Fahrzeug-Achsen-Tragstruktur zumindest ein Querträgersegment umfasst, das z. B. beidseitig an die Längsträgersegmente der Fahrzeug-Achsen-Tragstruktur montiert ist, und/oder zumindest ein Querträgersegment umfasst, das z. B beidseitig an Vertikalträgersegmente der Fahrzeug-Achsen-Tragstruktur montiert ist, und/oder zumindest ein Querträgersegment umfasst, das z. B. beidseitig an Anschlussknoten der Fahrzeug-Achsen-Tragstruktur montiert ist.

Das oder die Querträgersegmente können z. B. als eine Blech-, Guss, Schmiede- oder Profilkonstruktion oder eine Kombination hiervon ausgebildet sein.

Erfindungsgemäß es ist vorgesehen, dass an die vier oberen Anschlussknoten der Fahrzeug-Achsen-Tragstruktur z. B. jeweils ein Längsträgersegment und/oder jeweils ein Vertikalträgersegment der Fahrzeug-Achsen-Tragstruktur angebunden ist.

Die Längsträgersegmente der Fahrzeug-Achsen-Tragstruktur können z. B. die Fahrzeug-Achse oben überspannen.

Es ist möglich, dass die Fahrzeug-Achsen-Tragstruktur unter der Fahrzeug-Achse keine Längsträgersegmente aufweist, so dass z. B. keine Längsträgersegmente die Fahrzeug-Achse von unten überspannen.

Es ist möglich, dass die Fahrzeug-Achsen-Tragstruktur nur eine einzige Fahrzeug-Achse aufweist oder z. B. zumindest zwei Fahrzeug-Achsen aufweist.

Die Fahrzeug-Achse kann z. B. eine Triebachse oder Laufachse (z. B. Vorlauf- oder Nachlaufachse) sein.

Eine Fahrzeug-Achsen-Tragstruktur kann z. B. eine Triebachse aufweisen und alternativ oder ergänzend kann eine Fahrzeug-Achsen-Tragstruktur z. B. eine Laufachse aufweisen.

Die Anschlussknoten der Fahrzeug-Achsen-Tragstruktur, aber vorzugsweise auch die Anschlussknoten der anderen als Fahrzeug-Chassis-Modul ausgebildeten Tragstrukturen, dienen vorzugsweise zur Übertragung von Zug- und/oder Druckkräften in Längsrichtung der Fahrzeugkonstruktion. Sie sind somit vorzugsweise tragstruktureller Teil der Chassis-Längsträgerkonstruktionen.

Die Fahrzeugkonstruktion kann z. B. einen hinteren Rahmenüberhang hinter der Fahrzeug-Achsen-Tragstruktur umfassen.

Der Rahmenüberhang kann z. B. als Leiterrahmen mit zwei Längsträgern ausgebildet sein und vorzugsweise über zwei Konsolen mit der Fahrzeug-Achsen-Tragstruktur verbunden sein.

Die zwei Konsolen können z. B. jeweils zumindest einen, vorzugsweise jeweils zwei, Anschlussknoten aufweisen, über die sie mit den zumindest zwei, vorzugsweise vier, hinteren Anschlussknoten der Fahrzeug-Achsen-Tragstruktur z. B. lösbar verbunden sind.

Zwischen den Konsolen kann ein Querträger verlaufen, z. B. zur Verbindung der zwei Längsträger und/oder der zwei Konsolen. Dabei können die Konsolen jeweils insbesondere ermöglichen, dass mit der Verbindung, insbesondere Verschraubung zum Längsträger auch die Verbindung, insbesondere Verschraubung zum Querträger hergestellt werden kann. Eine Verschweißung Querträger-Längsträger ist auch möglich.

Die Konsolen können z. B. von den zwei Längsträgern nach unten abstehen und/oder sich nach unten verjüngen.

Es ist möglich, dass der Rahmenüberhang z. B. als eine ein Fahrzeug-Chassis-Modul bildende Tragstruktur mit zumindest zwei, vorzugsweise vier, Anschlussknoten ausgebildet ist, die mit den zumindest zwei, vorzugsweise vier, hinteren Anschlussknoten der Fahrzeug-Achsen-Tragstruktur z. B. lösbar verbunden sind. Die den Rahmenüberhang ausbildende Tragstruktur kann vorzugsweise auch z. B. vier hintere Anschlussknoten aufweisen.

Die Fahrzeugkonstruktion kann z. B. eine Vielzahl von Tragstrukturen umfassen, die jeweils ein Fahrzeug-Chassis-Modul bilden, die jeweils mehrere Anschlussknoten aufweisen und die jeweils über, vorzugsweise vier, Anschlussknoten-Paare vorzugsweise lösbar miteinander verbunden sind.

Es ist möglich, dass Längsträgersegmente der Tragstrukturen beidseitig über Anschlussknoten-Paare miteinander verbunden sind und im Wesentlichen in Querrichtung der Fahrzeugkonstruktion voneinander beabstandete Chassis-Längsträgerkonstruktionen bilden.

Es ist möglich, dass die Fahrzeug-Achse als Triebachse oder Laufachse (z. B. Vorlaufachse oder Nachlaufachse) ausgebildet ist.

Die Fahrzeugkonstruktion kann z. B. eine erste Fahrzeug-Achsen-Tragstruktur mit einer Triebachse aufweisen und eine zweite Fahrzeug-Achsen-Tragstruktur mit einer Laufachse (z. B. Vorlauf- oder Nachlaufachse) aufweisen, wobei die erste Fahrzeug-Achsen-Tragstruktur und die zweite Fahrzeug-Achsen-Tragstruktur z. B. unmittelbar nacheinander angeordnet sein können, z. B. als Triebachse mit Vorlaufachse oder Triebachse mit Nachlaufachse.

Die Laufachse kann z. B. liftbar ausgeführt sein.

Die Vertikalträgersegmente der Fahrzeug-Achsen-Tragstruktur können z. B. zumindest abschnittsweise Blech- oder Profilbauteile umfassen. Alternativ oder ergänzend können die Querträgersegmente der Fahrzeug-Achsen-Tragstruktur z. B. zumindest abschnittsweise Blech- oder Profilbauteile umfassen. Alternativ oder ergänzend können die Längsträgersegmente der Fahrzeug-Achsen-Tragstruktur z. B. zumindest abschnittsweise Blech- oder Profilbauteile umfassen.

Die Blechbauteile können z. B. gekantet sein.

Bei den Profilbauteilen kann es sich um geschlossene oder offene Profile handeln, z. B. Hohlprofile oder z. B. im Wesentlichen U-, L-, I- oder hutförmige Profile.

Die Anschlussknoten der Fahrzeug-Achsen-Tragstruktur können z. B. als Guss-, Schmiede- oder Blechbauteil ausgebildet sein.

Es ist möglich, dass zumindest zwei Anschlussknoten der Fahrzeug-Achsen-Tragstruktur jeweils eine Verbindungskonstruktion zur lösbaren Verbindung mit benachbarten Anschlussknoten umfassen und die Verbindungskonstruktion z. B. zumindest ein im Wesentlichen in Querrichtung der Fahrzeugkonstruktion erstreckendes Spannelement (z. B. Spannschraube) umfasst.

Es ist möglich, dass die Anschlussknoten der Fahrzeug-Achsen-Tragstruktur eine Klemmverbindung umfassen zur lösbaren Verbindung mit benachbarten Anschlussknoten und z. B. die Klemmverbindung zwei z. B. im Wesentlichen U-, Omega- oder C-förmige Klemmbacken und/oder zumindest ein Spannelement (z. B eine zentrale Spannschraube) zum Zusammenspannen der zwei Klemmbacken und somit benachbarter Anschlussknoten aufweist.

Die Klemmverbindung kann z. B. auch zwei Spannelemente aufweisen, z. B. jeweils ein Spannelement pro Anschlussknoten.

Im Kontext der Erfindung können die zwei Klemmbacken relativ zu den benachbarten Anschlussknoten z. B. lösbare und/oder separate Bauteile sein, wobei es auch möglich ist, dass einer der Klemmbacken unlösbar, z. B. einstückig-integral, an einem der benachbarten Anschlussknoten ausgebildet ist, z. B. angeformt, angegossen, angeschmiedet, angeschweißt, etc. ist.

Einer der Klemmbacken kann somit z. B. unlösbar und/oder einstückig integral an einem der benachbarten Anschlussknoten ausgebildet sein.

Das Spannelement erstreckt sich vorzugsweise im Wesentlichen in Querrichtung der Fahrzeugkonstruktion und ist z. B. von seitlich außen zum Spannen und/oder Lösen betätigbar.

Alternativ oder ergänzend ist es möglich, dass die Verbindungskonstruktion eine Laschen-Spannelement-Verbindung mit (z. B. zumindest zwei Laschen) und einem Spannelement (z. B. Spannschraube oder Bolzen) aufweist, das dazu dient, sich durch zumindest zwei oder zumindest drei Laschen zu erstrecken, vorzugsweise um die Laschen und insbesondere somit benachbarte Anschlussknoten miteinander zu verbinden und/oder um die Laschen gegeneinander zu verspannen.

Das Spannelement erstreckt sich vorzugsweise im Wesentlichen in Querrichtung der Fahrzeugkonstruktion und ist z. B. von seitlich außen zum Spannen und/oder Lösen betätigbar. Die Spannrichtung, z. B. Verschraubungsrichtung, kann folglich vorzugsweise im Wesentlichen der Querrichtung der Fahrzeugkonstruktion entsprechen.

Es ist möglich, dass zwischen (im Fahrbetrieb der Fahrzeugkonstruktion) bewegten Fahrwerksteilen/Fahrwerkskomponenten (z. B. Achse, Antrieb und/oder Räder) und der Fahrzeug-Achsen-Tragstruktur bzw. den Fahrzeug-Achsen-Tragstrukturen (zweckmäßig Achsmodulen) nur einseitig bewegte Bauteile (wie z. B. Lenker, Federn und/oder Dämpfer) angeordnet sind (also vorzugsweise keine fest mit dem Fahrzeug-Chassis (Traggestell) oder fest mit beweglichen Fahrwerksteilen (z. B. Achse, Antrieb und/oder Räder) verbundene Bauteile), und/oder kein z. B. zusätzlicher Zwischenhalter und/oder kein zusätzliches Bauteil zum Zweck der Verbindung zwischen der Fahrzeug-Achsen-Tragstruktur und bewegten Fahrwerksteilen/Fahrwerkskomponenten (z. B. Achse, Antrieb und/oder Räder), insbesondere Achsteilen, angeordnet ist.

Die Fahrzeug-Achsen-Tragstruktur kann z. B. mehrere, insbesondere vier Vertikalträgersegmente, mehrere Querträgersegmente und beidseitig zumindest ein Längsträgersegment (z. B. ausgebildet als Blech-, Guss, Schmiede- oder Profilkonstruktion oder eine Kombination hiervon), vorzugsweise zwei im Wesentlichen in Höhenrichtung der Fahrzeugkonstruktion voneinander beabstandete Längsträgersegmente aufweisen. Es ist möglich, dass auch die anderen als Fahrzeug-Chassis-Modul ausgebildeten Tragstrukturen vorzugsweise wie zuvor beschrieben ausgebildet sind.

Die Fahrzeugkonstruktion kann z. B. zumindest zwei, zumindest drei, zumindest vier oder zumindest fünf Tragstrukturen aufweisen, die jeweils vorzugsweise ein Fahrzeug-Chassis-Modul bilden.

Es ist möglich, dass die Tragstrukturen insbesondere lösbar tragstrukturell und/oder wiederholt montierbar miteinander verbunden sind, z. B. über benachbarte Anschlussknoten, insbesondere Anschlussknoten-Paare.

Die jeweilige Tragstruktur kann z. B. zumindest einen, vorzugsweise zumindest zwei in Längsrichtung der Fahrzeugkonstruktion voneinander beabstandete Querträgersegmente (z. B. eine oder mehrere Schubaussteifungen, Ringspanten und/oder Schubbleche) aufweisen, vorzugsweise zwei obere in Längsrichtung der Fahrzeugkonstruktion voneinander beabstandete Querträgersegmente und/oder zwei untere in Längsrichtung der Fahrzeugkonstruktion voneinander beabstandete Querträgersegmente.

Es ist möglich, dass die jeweilige Tragstruktur (z. B. einzelne und/oder separate) Anschlussknoten aufweist. Die Anschlussknoten können zweckmäßig z. B. lösbar oder unlösbar in die jeweilige Tragstruktur integriert sein.

Es ist möglich, dass die Anschlussknoten der jeweiligen Tragstruktur zur vorzugsweise lösbaren und/oder wiederholt montierbaren Verbindung oder unlösbaren Verbindung mit jeweils einem Längsträgersegment, einem Querträgersegment und/oder einem Vertikalträgersegment der jeweiligen Tragstruktur dienen. Auch hier können alternativ oder ergänzend z. B. diagonal verlaufende Trägersegmente zum Einsatz kommen.

Es ist möglich, dass die Längsträgersegmente der Tragstrukturen über benachbarte Anschlussknoten miteinander verbunden sind und in Querrichtung der Fahrzeugkonstruktion voneinander beabstandete Chassis-Längsträgerkonstruktionen bilden.

Im Kontext der Erfindung können somit insbesondere Zug- und/oder Druckkräfte in den Längsträgersegmenten über die benachbarten Anschlussnoten vorteilhaft übertragen werden.

Es ist möglich, dass benachbarte Anschlussknoten der Tragstrukturen zur lösbaren Verbindung und/oder wiederholt montierbaren Verbindung der Tragstrukturen miteinander dienen, so dass die Tragstrukturen über lösbar aneinander montierte Anschlussknoten (zweckmäßig Anschlussknoten-Paare) miteinander verbunden sein können.

Benachbarte Anschlussknoten können somit vorzugsweise lösbar aneinander montiert sein und/oder Anschlussknoten-Paare bilden.

Es ist möglich, dass aneinander montierte benachbarte Anschlussknoten im Wesentlichen in Längsrichtung der Fahrzeugkonstruktion auf Stoß aneinander anliegen, und/oder über jeweils eine in Höhen- und in Querrichtung der Fahrzeugkonstruktion ausgerichtete Schnittebene voneinander trennbar sind.

Die jeweilige Tragstruktur kann z. B. vier vordere Anschlussknoten und/oder vier hintere Anschlussknoten aufweisen, wobei die vier vorderen Anschlussknoten und/oder die vier hinteren Anschlussknoten z. B. Eckpunkte der jeweiligen Tragstruktur (z. B. eines fiktiven Quaders) bilden können.

Es ist möglich, dass die jeweilige Tragstruktur eine im Wesentlichen Quaderform bildet und die Quaderform z. B. durch die Anschlussknoten und alternativ oder ergänzend durch die Längsträgersegmente, die Querträgersegmente und/oder die Vertikalträgersegmente der jeweiligen Tragstruktur definiert wird. Dadurch können im Wesentlichen quaderförmige Tragstrukturen erzeugt werden.

Es ist möglich, dass die jeweilige Tragstruktur als (z. B. im Wesentlichen quaderförmige) Gitter- oder Geripperahmenkonstruktion ausgebildet ist.

Die Tragstrukturen sind vorzugsweise selbstragend ausgebildet (und insbesondere entsprechend ihrer Aufgabe in der Gesamttragstruktur dimensioniert).

Die Fahrzeugkonstruktion ist z. B. modular, insbesondere modulbaukastenartig, umkonfigurierbar, insbesondere auch nach der ursprünglichen Endmontage der Fahrzeugkonstruktion.

Zu erwähnen ist, dass die hierin erwähnte "lösbare Verbindung" vorzugsweise ausgeführt sein kann, so dass die lösbar miteinander verbundenen Teile insbesondere wiederholt montierbar sind, also z. B. mehrfach voneinander getrennt und wieder aneinander montiert werden können.

Zu erwähnen ist noch, dass die Längsrichtung der Fahrzeugkonstruktion im Kontext der Erfindung z. B. im Wesentlichen parallel zur Mittelachse der Fahrzeugkonstruktion verlaufen kann und/oder z. B. durch die Längserstreckung der Längsträgersegmente definiert werden kann.

Die Längsträgersegmente können z. B. mit einer Abweichung im Bereich von max. ungefähr +/-35, +/-25°, +/-10° oder +/-5° schräg zur Mittelachse der Fahrzeugkonstruktion verlaufen. Die Querrichtung und/oder Höhenrichtung der Fahrzeugkonstruktion kann zweckmäßig im Wesentlichen rechtwinklig (z. B. mit einer Abweichung im Bereich von max. ungefähr +/-35, +/-25°, +/-10° oder +/-5°) zur Mittelachse der Fahrzeugkonstruktion ausgerichtet sein.

Die benachbarten Anschlussknoten können jeweils z. B. als ein Blechteil oder ein Guss-, Schmiede- oder Frästeil ausgebildet sein und folglich vorzugsweise mittels eines Guss-, Schmiede- oder Fräsverfahrens hergestellt sein.

Es können alle vier oder nur einige der vier Anschlussknoten-Paare, z. B. nur zwei der Anschlussknoten-Paare, mit z. B. der Klemmverbindung wie hierin offenbart verbunden sein. Es ist also möglich, dass zwei Tragstrukturen über unterschiedliche Anschlussknoten und/oder unterschiedliche Anschlussknoten-Verbindungen lösbar miteinander verbunden sind.

Die Erfindung umfasst auch ein Gesamtfahrzeug z. B. in Form eines Nutzfahrzeugs, vorzugsweise ein Lastkraftwagen (z. B. Sattelzugmaschine oder Transporter), mit einer Fahrzeugkonstruktion wie hierin offenbart.

Die zuvor beschriebenen bevorzugten Ausführungsformen und Merkmale der Erfindung sind beliebig miteinander kombinierbar, sofern sie durch die beigefügten Ansprüche abgedeckt sind. Andere vorteilhafte Weiterbildungen der Erfindung sind in den Unteransprüchen offenbart oder ergeben sich aus der nachstehenden Beschreibung bevorzugter Ausführungsformen der Erfindung in Verbindung mit den beigefügten Figuren.
- Figur 1: zeigt eine perspektivische Ansicht einer Fahrzeugkonstruktion gemäß einer Ausführungsform der Erfindung,
- Figur 2: zeigt eine perspektivische Ansicht einer Fahrzeugkonstruktion gemäß einer anderen Ausführungsform der Erfindung,
- Figur 3: zeigt eine perspektivische Ansicht einer als Fahrzeug-Chassis-Modul ausgebildeten Tragstruktur gemäß einer Ausführungsform der Erfindung,
- Figur 4: zeigt eine perspektivische Ansicht der Tragstruktur der Figur 3 mit Fahrzeug-Achse und Fahrwerks-/Funktionskomponenten gemäß einer Ausführungsform der Erfindung,
- Figur 5: zeigt eine perspektivische Ansicht einer Fahrzeug-Achse und Fahrwerks-/Funktionskomponenten für die Tragstruktur der Figuren 3 und 4,
- Figur 6: zeigt eine perspektivische Ansicht von unten der Tragstruktur der Figuren 3 und 4 mit Fahrzeug-Achse und Fahrwerks-/Funktionskomponenten,
- Figur 7: zeigt eine perspektivische Ansicht einer als Fahrzeug-Chassis-Modul ausgebildeten Tragstruktur gemäß einer anderen Ausführungsform der Erfindung,
- Figur 8: zeigt eine perspektivische Ansicht der Tragstruktur der Figur 7 mit Fahrzeug-Achse und Fahrwerks-/Funktionskomponenten gemäß einer Ausführungsform der Erfindung,
- Figur 9: zeigt eine perspektivische Ansicht einer Fahrzeug-Achse und Fahrwerks-/Funktionskomponenten für die Tragstruktur der Figuren 7 und 8,
- Figur 10: zeigt eine perspektivische Ansicht von unten der Tragstruktur der Figuren 7 und 8 mit Fahrzeug-Achse und Fahrwerks-/Funktionskomponenten,
- Figur 11: zeigt eine perspektivische Ansicht einer als Fahrzeug-Chassis-Modul ausgebildeten Tragstruktur gemäß einer Ausführungsform der Erfindung,
- Figur 12: zeigt eine perspektivische Ansicht einer Verbindungskonstruktion zur Verbindung zweier benachbarter Anschlussknoten gemäß einer Ausführungsform der Erfindung, und
- Figur 13: zeigt eine perspektivische Ansicht einer Verbindungskonstruktion zur Verbindung zweier benachbarter Anschlussknoten gemäß einer anderen Ausführungsform der Erfindung.

Die in den Figuren beschriebenen bevorzugten Ausführungsformen der Erfindung stimmen teilweise überein, wobei für ähnliche oder identische Teile die gleichen Bezugszeichen verwendet werden und zu deren Erläuterung auch auf die Beschreibung der anderen Ausführungsformen verwiesen werden kann. Der Übersichtlichkeit halber sind nicht alle Teile in allen Figuren mit Bezugszeichen versehen.

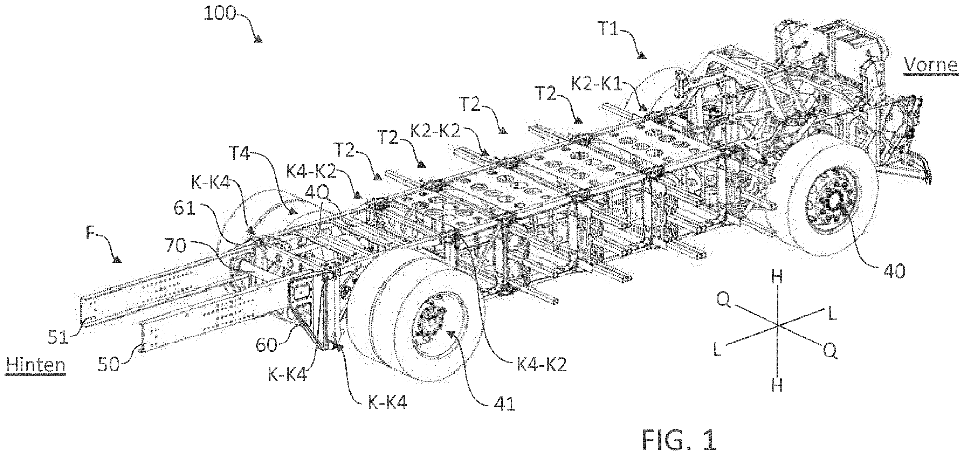

Figur 1 zeigt eine perspektivische Ansicht einer beispielhaften Fahrzeugkonstruktion 100 gemäß einer Ausführungsform der Erfindung.

Die Fahrzeugkonstruktion 100 ist zweckmäßig ein in ihrer Längsrichtung L tragstrukturell und vorzugsweise funktionell modular aufgebautes Fahrzeug-Chassis für ein Gesamtfahrzeug in Form eines Nutzfahrzeugs ausgeführt.

Die Fahrzeugkonstruktion 100 umfasst eine Vielzahl an Tragstrukturen T1, T2 und T4, die jeweils ein Fahrzeug-Chassis-Modul bilden.

Die Tragstruktur T1 bildet ein Vorderachsmodul und weist eine Fahrzeug-Vorderachse 40 auf.

Die Tragstrukturen T2 sind zum Tragen nicht gezeigter Funktionskomponenten (z. B. Tanks, Getriebe, Batterien, Motoren, etc.) ausgebildet.

Die Tragstruktur T4 ist als Fahrzeug-Achsen-Tragstruktur T4 ausgebildet und weist insbesondere eine als Triebachse 41 ausgebildete Fahrzeug-Achse 41 auf.

Die Fahrzeug-Achsen-Tragstruktur T4 ist in Längsrichtung L der Fahrzeugkonstruktion 100 die hinterste als Fahrzeug-Chassis-Modul ausgebildete Tragstruktur und dient insbesondere zum Antreiben der Fahrzeugkonstruktion 100 und somit des Nutzfahrzeugs.

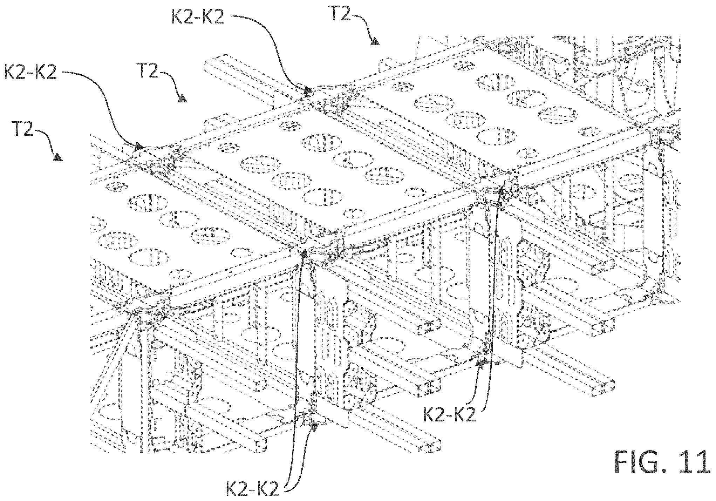

Zwischen der Tragstruktur T1 und der Fahrzeug-Achsen-Tragstruktur T4 sind beispielhaft vier weitere Tragstrukturen T2 angeordnet, die einheitlich mit dem Bezugszeichen T2 gekennzeichnet sind und in vergrößerter Ansicht in Figur 11 dargestellt sind.

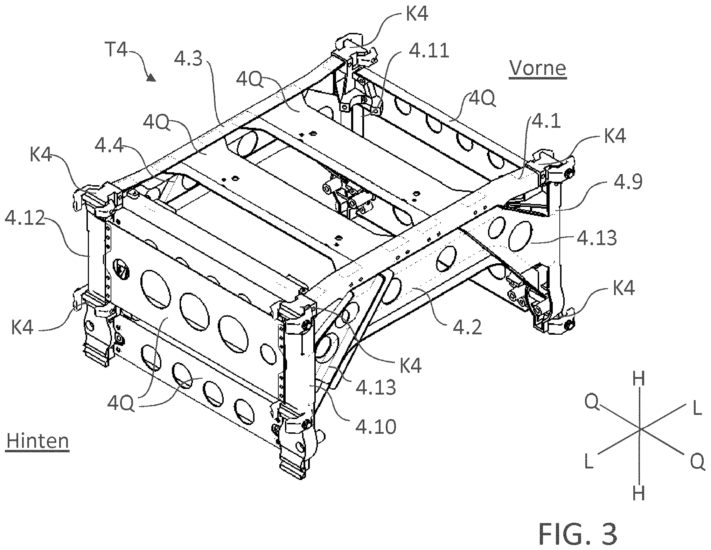

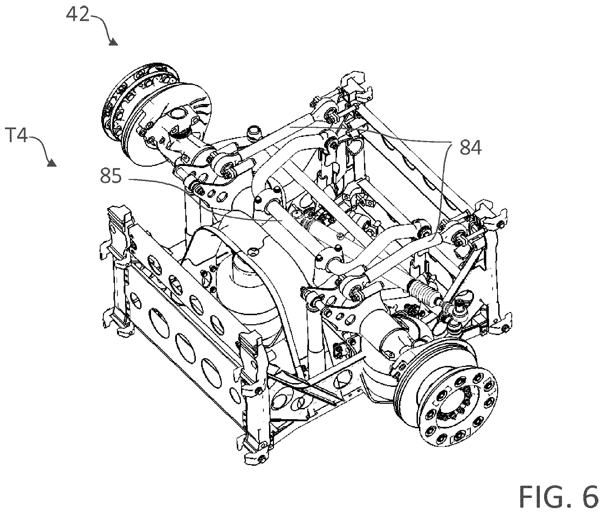

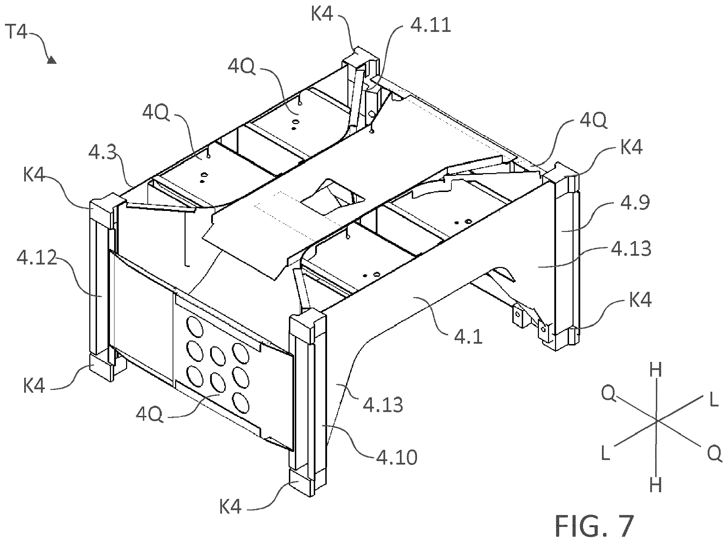

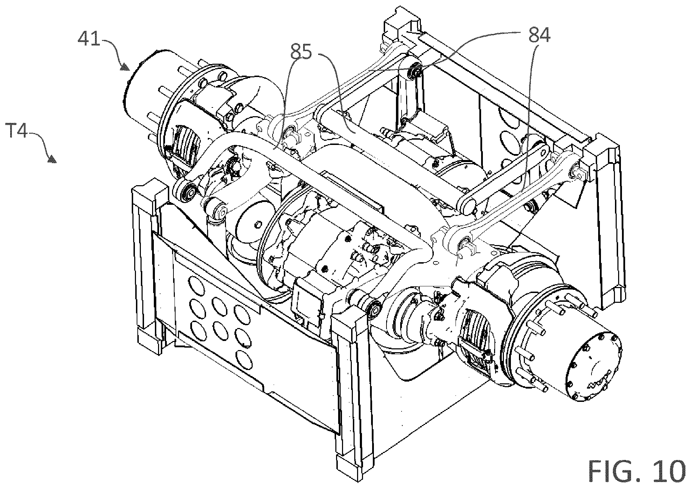

Die Fahrzeug-Achsen-Tragstruktur T4 kann z. B. gemäß der Ausführungsform der Figuren 3 bis 6 oder gemäß der Ausführungsform der Figuren 7 bis 10 ausgebildet werden.

Die Fahrzeug-Achsen-Tragstruktur T4 kann vorzugsweise zwei obere, hintere und in Querrichtung Q der Fahrzeugkonstruktion 100 voneinander beabstandete Anschlussknoten K4 aufweisen und optional auch zwei untere, hintere und in Querrichtung Q der Fahrzeugkonstruktion 100 voneinander beabstandete Anschlussknoten K4 umfassen.

Darüber hinaus kann die Fahrzeug-Achsen-Tragstruktur T4 vorzugsweise zwei obere, vordere und in Querrichtung Q der Fahrzeugkonstruktion 100 voneinander beabstandete Anschlussknoten K4 aufweisen und z. B. zwei untere, vordere und in Querrichtung Q der Fahrzeugkonstruktion 100 voneinander beabstandete Anschlussknoten K4 umfassen.

Die Fahrzeug-Achsen-Tragstruktur T4 umfasst zweckmäßig beidseitig zwei in Höhenrichtung H der Fahrzeugkonstruktion 100 voneinander beabstandete Längsträgersegmente 4.1 bis 4.4 und beidseitig zwei in Längsrichtung L der Fahrzeugkonstruktion 100 voneinander beabstandete Vertikalträgersegmente 4.9 bis 4.12 und zusätzlich mehrere in Längsrichtung L der Fahrzeugkonstruktion 100 voneinander beabstandete Querträgersegmente 4Q.

Die Fahrzeugkonstruktion 100 umfasst in Längsrichtung L der Fahrzeugkonstruktion 100 hinter der Fahrzeug-Achsen-Tragstruktur T4 einen leiterrahmenförmigen Rahmenüberhang F.

Der Rahmenüberhang F umfasst zwei Längsträger 50, 51, die z. B. als U-Profil ausgebildet sind, aber auch z. B. als I- oder L-Profil ausgebildet sein können. Der Rahmenüberhang F ist somit als insbesondere klassischer leiterrahmenförmiger Rahmenüberhang F ausgebildet.

Die zwei Längsträger 50, 51 sind über zwei Konsolen 60, 61 mit der Fahrzeug-Achsen-Tragstruktur T4 tragstrukturell verbunden.

Die Konsolen 60, 61 umfassen zumindest zwei in Querrichtung Q der Fahrzeugkonstruktion 100 voneinander beabstandete Anschlussknoten K (vorzugsweise zwei obere und optional zwei untere Anschlussknoten K) und zwar zur lösbaren Verbindung mit den zuvor erwähnten hinteren Anschlussknoten K4 der Fahrzeug-Achsen-Tragstruktur T4.

Somit ist es möglich, dass die Konsolen 60, 61 und die hintere Fahrzeug-Achsen-Tragstruktur T4 über, vorzugsweise zumindest zwei oder zumindest vier, Anschlussknoten-Paare K-K4 lösbar miteinander verbunden sind.

Zwischen den zwei Konsolen 60, 61 erstreckt sich ein Querträger 70, der an die Konsolen 60, 61 und/oder die Längsträger 50, 51 montiert sein kann.

Es ist möglich, dass auch die zur Fahrzeug-Achsen-Tragstruktur T4 benachbarte Tragstruktur T2 z. B. vier Anschlussknoten K2 aufweist und die Fahrzeug-Achsen-Tragstruktur T4 und die Tragstruktur T2 über vorzugsweise vier Anschlussknoten-Paare K4-K2 vorzugsweise lösbar miteinander verbunden sind.

Auch zwei benachbarte Tragstrukturen T2 können über z. B. vier Anschlussknoten-Paare K2-K2 vorzugsweise lösbar miteinander verbunden sein.

Auch die Tragstruktur T1 kann mit einer Tragstruktur T2 über z. B. vier Anschlussknoten-Paare K2-K1 vorzugsweise lösbar verbunden sein.

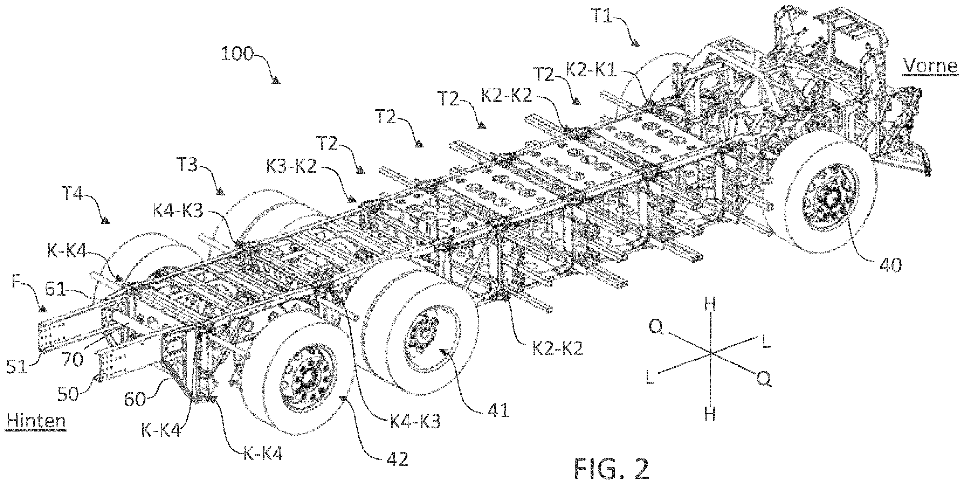

Figur 2 zeigt eine perspektivische Ansicht einer Fahrzeugkonstruktion 100 gemäß einer anderen Ausführungsform der Erfindung.

Eine Besonderheit der in Figur 2 gezeigten Ausführungsform ist, dass die Fahrzeugkonstruktion 100 eine erste Fahrzeug-Achsen-Tragstruktur T3 mit einer Triebachse 41 aufweist und direkt dahinter eine zweite Fahrzeug-Achsen-Tragstruktur T4 mit einer Nachlaufachse 42, wobei auch Ausführungsformen möglich sind, bei der die erste Fahrzeug-Achsen-Tragstruktur T3 eine Vorlaufachse aufweist und direkt dahinter eine zweite Fahrzeug-Achsen-Tragstruktur T4 eine Triebachse 41 aufweist.

Die Fahrzeug-Achsen-Tragstruktur T3 kann z. B. gemäß der Ausführungsform der Figuren 3 bis 6 oder gemäß der Ausführungsform der Figuren 7 bis 10 ausgebildet werden.

Auch bei dieser Ausführungsform können die Konsolen 60, 61 und die Fahrzeug-Achsen-Tragstruktur T4 über, vorzugsweise zumindest zwei oder zumindest vier, Anschlussknoten-Paare K-K4 lösbar miteinander verbunden sein.

Auch die Fahrzeug-Achsen-Tragstrukturen T4 und T3 können über vorzugsweise vier Anschlussknoten-Paare K4-K3 zweckmäßig lösbar miteinander verbunden sein. Das gleiche gilt auch für die Fahrzeug-Achsen-Tragstruktur T3 und die Tragstruktur T2 und somit die Anschlussknoten-Paare K3-K2.

Längsträgersegmente der Tragstrukturen T1, T2, T3, T4 der Figuren 1 und 2 und die Längsträger 50, 51 sind somit beidseitig über Anschlussknoten-Paare K-K4, K4-K3, K3-K2, K2-K2, K2-K1 miteinander verbunden und bilden in Querrichtung Q der Fahrzeugkonstruktion 100 voneinander beabstandete Chassis-Längsträgerkonstruktionen.

In den Figuren 1 und 2 ist der Rahmenüberhang F leiterrahmenförmig ausgebildet. Es sind aber auch Ausführungsformen möglich, bei denen der Rahmenüberhang F als eine ein Fahrzeug-Chassis-Modul bildende Tragstruktur mit vier vorderen Anschlussknoten ausgebildet ist, die mit den vier hinteren Anschlussknoten K4 der Fahrzeug-Achsen-Tragstruktur T4 lösbar verbunden sind. Bei dieser Ausführungsform kann vorzugsweise auf Konsolen zwischen Rahmenüberhang F und Fahrzeug-Achsen-Tragstruktur T4 verzichtet werden.

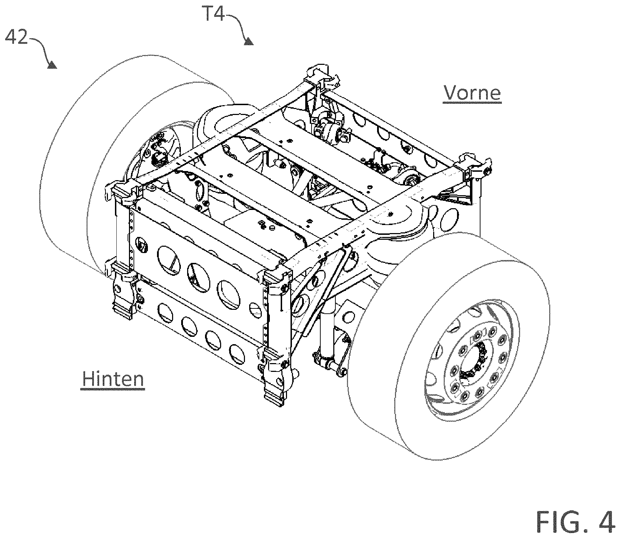

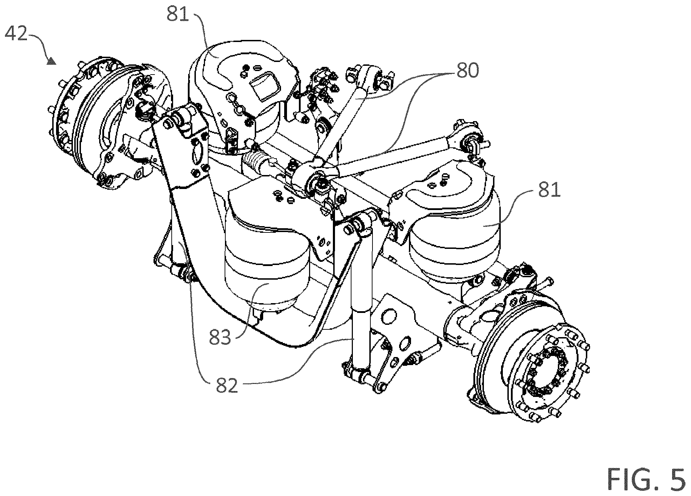

Figur 3 zeigt eine perspektivische Ansicht einer als Fahrzeug-Chassis-Modul ausgebildeten Fahrzeug-Achsen-Tragstruktur T4 gemäß einer Ausführungsform der Erfindung. Figur 4 zeigt eine perspektivische Ansicht der Fahrzeug-Achsen-Tragstruktur T4 der Figur 3 mit Fahrzeug-Achse und Fahrwerks-/Funktionskomponenten. Figur 5 zeigt eine perspektivische Ansicht einer Fahrzeug-Achse und Fahrwerks-/Funktionskomponenten für die Fahrzeug-Achsen-Tragstruktur T4 der Figuren 3 und 4 und Figur 6 zeigt eine perspektivische Ansicht von unten der Fahrzeug-Achsen-Tragstruktur T4 der Figuren 3 und 4 mit Fahrzeug-Achse und Fahrwerks-/Funktionskomponenten. Die Fahrzeug-Achsen-Tragstruktur T4 wird nachfolgend unter gemeinsamer Bezugnahme auf die Figuren 3 bis 6 beschrieben.

Die Fahrzeug-Achsen-Tragstruktur T4 umfasst eine als nicht antreibbare Laufachse 42 (z. B. Vorlauf- oder Nachlaufachse) ausgebildete Fahrzeug-Achse 42, die allerdings auch als Fahrzeug-antreibende Triebachse 41 ausgebildet sein kann.

Die Fahrzeug-Achsen-Tragstruktur T4 weist in Längsrichtung L der Fahrzeugkonstruktion 100 zumindest zwei vordere Anschlussknoten K4 und vorzugsweise zumindest zwei hintere Anschlussknoten K4 auf.

In der gezeigten Ausführungsform umfasst die Fahrzeug-Achsen-Tragstruktur T4 vier vordere Anschlussknoten K4 und vier hintere Anschlussknoten K4 und somit acht Anschlussknoten K4.

Die vier vorderen Anschlussknoten K4 und die vier hinteren Anschlussknoten K4 können z. B. Eckpunkte eines fiktiven Quaders bilden und folglich z. B. gleich weit von einem Raummittelpunkt entfernt sein. Das Vereinfacht eine modulare Austauschbarkeit sowie die Anordnung an unterschiedlichen Positionen.

Die Fahrzeug-Achse 42 erstreckt sich innerhalb der Fahrzeug-Achsen-Tragstruktur T4, ragt aber im Wesentlichen in Querrichtung Q der Fahrzeugkonstruktion 100 aus der Fahrzeug-Achsen-Tragstruktur T4 hinaus.

Die vier vorderen Anschlussknoten K4 und die vier hinteren Anschlussknoten K4 können im Wesentlichen baugleich ausgebildet sein, vorzugsweise so, dass die Fahrzeug-Achsen-Tragstruktur T4 in Höhenrichtung H der Fahrzeugkonstruktion 100 um 180° gedreht an oder in die Fahrzeugkonstruktion 100 montierbar ist, insbesondere an eine oder mehrere als Fahrzeug-Chassis-Module ausgebildete Tragstrukturen T3 oder T2 und/oder die Konsolen 60, 61.

Die Fahrzeug-Achsen-Tragstruktur T4 ist ausgeführt zur Aufnahme und Montage einer Vielzahl von Funktionskomponenten, insbesondere Fahrwerkskomponenten, nämlich einer Längs- und Querführung 80, einer Federungs- und/oder Dämpfungseinrichtung 81, 82, einer Lifteinrichtung 83 zum Anheben und Absenken der Fahrzeug-Achse 42, falls die Fahrzeug-Achse eine Laufachse ist, einer Längsführung 84 und zumindest einer Rollstabilisierung 85. Auch ein Bauteil 86 mit integrierter Längsführungs-Funktion, Querführungs-Funktion und Rollstabilisierungs-Funktion ist möglich.

Die Funktionskomponenten 80, 81, 82, 83, 84 und 85 und optional 86 sind vorzugsweise alle innerhalb der Fahrzeug-Achsen-Tragstruktur T4 angeordnet und an die Fahrzeug-Achsen-Tragstruktur T4 montiert.

Die Fahrzeug-Achsen-Tragstruktur T4 umfasst beidseitig zwei obere und zwei untere Längsträgersegmente 4.1-4.4, die jeweils im Wesentlichen in Querrichtung Q der Fahrzeugkonstruktion 100 voneinander beabstandet sind und die z. B. jeweils eine vordere in Längsrichtung L wirkende Versteifungsstruktur 4.13 und eine hintere in Längsrichtung wirkende Versteifungsstruktur 4.13 aufweisen können. Die Längsträgersegmente 4.1, 4.2 können allerdings auch zu einem Längsträgersegment zusammengefasst werden, ebenso die Längsträgersegmente 4,3, 4.4.

Die Fahrzeug-Achsen-Tragstruktur T4 umfasst des Weiteren Querträgersegmente 4Q, die an obere Längsträgersegmente 4.1, 4.3 der Fahrzeug-Achsen-Tragstruktur T4 montiert sind und Querträgersegmente 4Q, die an Vertikalträgersegmente 4.9-4.12 der Fahrzeug-Achsen-Tragstruktur T4 montiert sind. Es sind auch Ausführungsformen möglich, in denen Querträgersegmente 4Q an Anschlussknoten K4 z. B. lösbar oder unlösbar angeschlossen sind. An die vier oberen Anschlussknoten K4 der Fahrzeug-Achsen-Tragstruktur T4 ist jeweils ein Längsträgersegment 4.1, 4.3 und ein Vertikalträgersegment 4.9-4.12 z. B. lösbar oder unlösbar angeschlossen.

Die Längsträgersegmente 4.1-4.4 überspannen die Fahrzeug-Achse 42 von oben, wobei die Fahrzeug-Achsen-Tragstruktur T4 unter der Fahrzeug-Achse 42 vorzugsweise keine Längsträgersegmente aufweist. Es ist allerdings auch denkbar, zumindest ein Längsträgersegmente unter der Fahrzeug-Achse 42 verlaufen zu lassen.

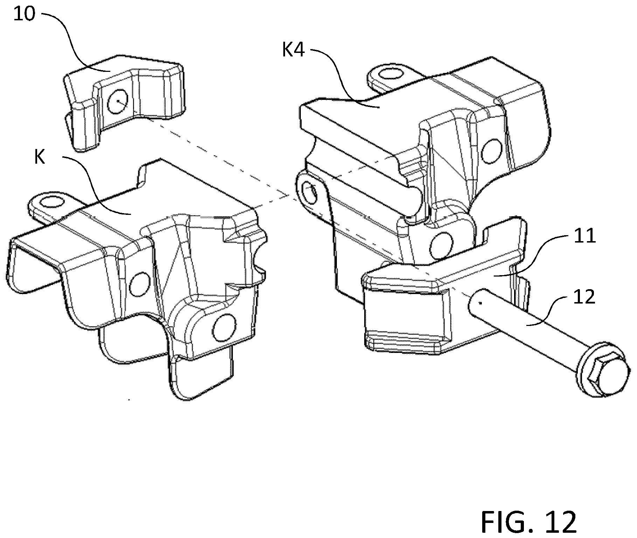

Figur 3 zeigt ferner, dass die Anschlussknoten K4 der Fahrzeug-Achsen-Tragstruktur T4 vorzugsweise eine Klemmverbindung umfassen zur lösbaren Verbindung mit benachbarten Anschlussknoten und die Klemmverbindung zwei Klemmbacken und ein Spannelement zum Zusammenspannen der zwei Klemmbacken und somit benachbarter Anschlussknoten (z. B. K-K4, K4-2, K4-K3) aufweist. Die Klemmverbindung ist unter Bezugnahme auf die Figur 12 genauer beschrieben.

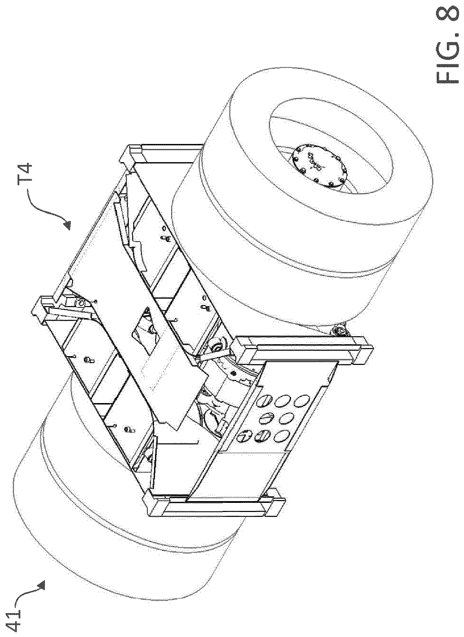

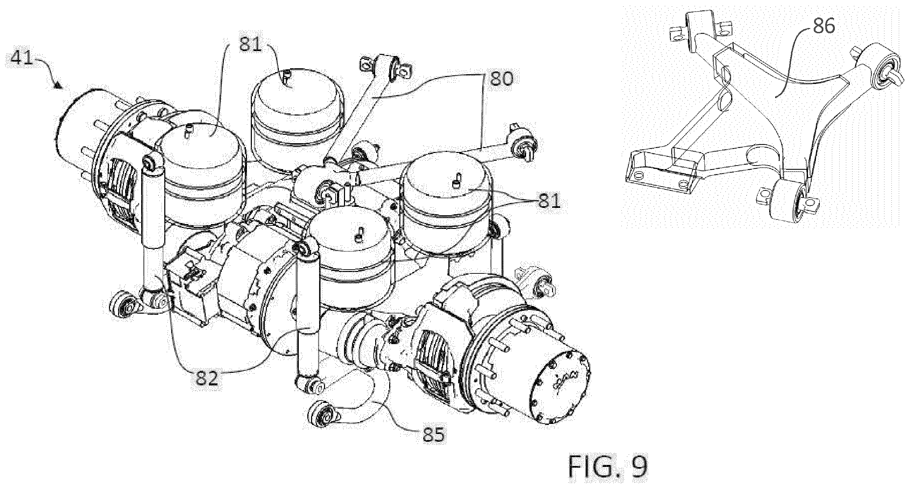

Figur 7 zeigt eine perspektivische Ansicht einer als Fahrzeug-Chassis-Modul ausgebildeten Fahrzeug-Achsen-Tragstruktur T4 gemäß einer anderen Ausführungsform der Erfindung. Figur 8 zeigt eine perspektivische Ansicht der Fahrzeug-Achsen-Tragstruktur T4 der Figur 7 mit Fahrzeug-Achse und Fahrwerks-/Funktionskomponenten. Figur 9 zeigt eine perspektivische Ansicht einer Fahrzeug-Achse und Fahrwerks-/Funktionskomponenten für die Fahrzeug-Achsen-Tragstruktur T4 der Figuren 7 und 8 und Figur 10 zeigt eine perspektivische Ansicht von unten der Fahrzeug-Achsen-Tragstruktur T4 der Figuren 7 und 8 mit Fahrzeug-Achse und Fahrwerks-/Funktionskomponenten. Die Fahrzeug-Achsen-Tragstruktur T4 wird nachfolgend unter gemeinsamer Bezugnahme auf die Figuren 7 bis 10 beschrieben.

Die Fahrzeug-Achsen-Tragstruktur T4 ist insbesondere zur Aufnahme einer Fahrzeugantreibenden Triebachse 41 ausgeführt, kann aber auch zur Aufnahme einer Laufachse 42 dienen.

Die Fahrzeug-Achsen-Tragstruktur T4 umfasst z. B. zwei Rollstabilisierungen 85, was insbesondere bei sogenannten Hochlastfahrzeugen vorteilhaft ist.

Die Fahrzeug-Achsen-Tragstruktur T4 umfasst mehrere Schub- und Aussteifungsbleche und beidseitig nur ein Längsträgersegment 4.1, 4.3.

Die Fahrzeug-Achsen-Tragstruktur T4 im Kontext der Erfindung umfasst vorzugsweise die zweckmäßig komplette Anschlussgeometrie für die Fahrwerkskomponenten (insbesondere Längs- und Querführung 80, Federungs- und/oder Dämpfungseinrichtung 81, 82, optional Lifteinrichtung 83 zum Anheben und Absenken der Fahrzeug-Achse, falls die Fahrzeug-Achse eine Laufachse 42 ist, eine Längsführung 84 und zumindest eine Rollstabilisierung 85) inklusive der erforderlichen Anschlusssteifigkeiten und darüber hinaus die Gesamtsteifigkeit, um sowohl Lasten aus dem Gesamtfahrzeug (z. B. Nutzfahrzeug) als Teil des Fahrzeug-Chassis als auch Lasten der Fahrzeug-Achse 41, 42 aufnehmen zu können.

Figur 12 zeigt eine perspektivische Ansicht einer Klemmverbindung zur Verbindung zweier benachbarter Anschlussknoten, z. B. Anschlussknoten K und Anschlussknoten K4, und somit eines Anschlussknoten-Paars (z. B. K-K4) gemäß einer Ausführungsform der Erfindung.

Eine Besonderheit ist, dass die benachbarten Anschlussknoten K, K4 (und somit das Anschlussknoten-Paar K, K4) über eine lösbare Klemmverbindung miteinander verbunden werden können. Die Klemmverbindung umfasst zwei im Wesentlichen U-, Omega- oder C-förmige Klemmbacken 10 und 11.

Die Klemmbacken 10 und 11 sind über ein Spannelement 12 (z. B. eine zentrale Spannschraube) im Wesentlichen in Querrichtung Q der Fahrzeugkonstruktion 100 zueinander hin beaufschlagbar, wodurch die benachbarten Anschlussknoten K, K4 im Wesentlichen in Längsrichtung L der Fahrzeugkonstruktion 100 zueinander hin beaufschlagt werden können.

Auch alle oder zumindest einige andere benachbarten Anschlussknoten (Anschlussknoten-Paare) können gemäß dem in Figur 12 gezeigten Knotenkonzept lösbar miteinander verbunden werden.

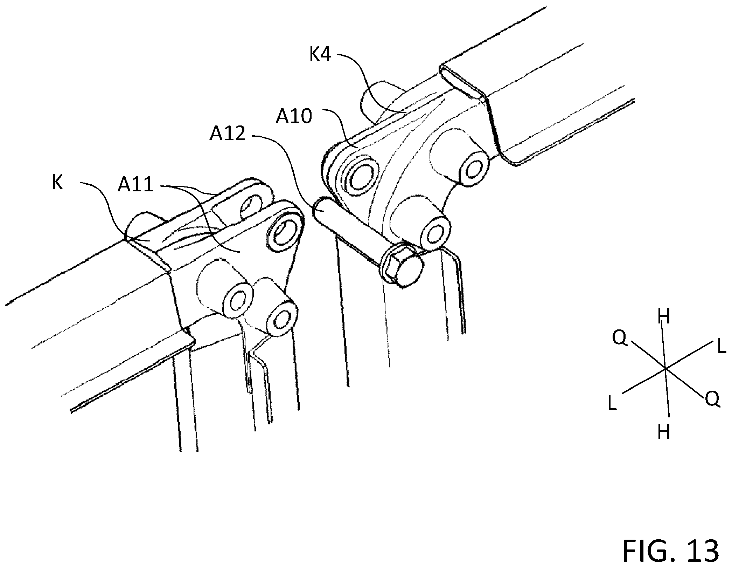

Figur 13 zeigt eine perspektivische Ansicht einer Verbindungskonstruktion zur Verbindung zweier benachbarter Anschlussknoten K, K4 gemäß einer anderen Ausführungsform der Erfindung.

Figur 13 zeigt eine Laschen-Spannelement-Verbindung A10, A11, A12 mit zumindest zwei Laschen A10, A11 und einem Spannelement A12 (z. B. Bolzen oder Spannschraube), das dazu dient, sich durch die Laschen A10, A11 zu erstrecken, vorzugsweise um die Laschen A10, A11 und folglich die benachbarten Anschlussknoten K, K4 lösbar zu verbinden und/oder die Laschen A10, A11 gegeneinander zu verspannen.

Der Anschlussknoten K4 z. B. umfasst zumindest eine Lasche A10, wobei der Anschlussknoten K zumindest zwei Laschen A11 umfasst. Die Lasche A10 des Anschlussknotens K4 kann sandwichförmig zwischen den zwei Laschen A11 des Anschlussknotens K angeordnet werden.

Das Spannelement A12 wird durch die Laschen A10, A11 geführt, um die Laschen A10, A11 vorzugsweise gegeneinander zu verspannen.

Das Spannelement A12 erstreckt sich im Wesentlichen in Querrichtung Q der Fahrzeugkonstruktion 100.

Es ist möglich, dass die Längsträgersegmente, Querträgersegmente und/oder Vertikalträgersegmente z. B. auch zweckmäßig schräg und somit nicht rechtwinklig zum Koordinatensystem L-Q-H verlaufen können. Es ist möglich, dass die Anschlussknoten z. B. lösbar an Längsträgersegmente, Querträgersegmente und/oder Vertikalträgersegmente der jeweiligen Tragstruktur zweckmäßig anmontiert sein können und somit z. B. Einzelbauteile darstellen können. Alternativ oder ergänzend ist es möglich, dass die Anschlussknoten z. B. unlösbar (z. B. einstückig-integral und/oder durch eine Schweißverbindung etc.) an Längsträgersegmenten, Querträgersegmenten und/oder Vertikalträgersegmenten der jeweiligen Tragstruktur zweckmäßig ausgebildet sein können und somit z. B. die Anschlussknoten und die Längsträgersegmente, die Querträgersegmente und/oder die Vertikalträgersegmente ein (z. B. im Wesentlichen knochenförmiges) Einzelbauteil bilden können. Im Kontext der Erfindung kann z. B. an einem ersten (zweckmäßig inneren) Knoten ein Stabelement (z. B. ähnlich einer Schraube, vorzugsweise mit Gewinde) ausgebildet sein, z. B. angegossen oder angeschmiedet sein. Außenseitig kann z. B. ein Gewinde ausgebildet sein und ein zweiter (zweckmäßig äußerer) Knoten kann zweckmäßig mit dem Stabelement verbunden werden.

Die Erfindung ist nicht auf die oben beschriebenen bevorzugten Ausführungsformen beschränkt, sie ist durch die Ansprüche definiert.

### Bezugszeichenliste

- T1: Tragstruktur mit Vorderachse
- K1: Anschlussknoten

- T2: Tragstruktur
- K2: Anschlussknoten

- T3: Tragstruktur, vorzugsweise mit Triebachse
- K3: Anschlussknoten

- T4: Tragstruktur, vorzugsweise mit Trieb- oder Laufachse
- K4: Anschlussknoten
- 4.1 bis 4.4: Längsträgersegmente
- 4Q: Querträgersegmente
- 4.9 bis 4.12: Vertikalträgersegmente
- 4.13: Versteifungsstruktur

- 10: Klemmbacken
- 11: Klemmbacken
- 12: Spannelement

- A10: Lasche
- A11: Lasche(n)
- A12: Spannelement, z. B. Bolzen

- 40: Vorderachse
- 41: Triebachse
- 42: Laufachse, z. B. Vorlauf- oder Nachlaufachse

- F: hinterer Rahmenüberhang
- K: Anschlussknoten
- 50: Längsträger
- 51: Längsträger
- 60: Konsole
- 61: Konsole
- 70: Querträger

- 80: Längs- und Querführung
- 81, 82: Federungs- und/oder Dämpfungseinrichtung
- 83: Lifteinrichtung, insbesondere zum Anheben und Absenken einer Fahrzeug-Achse
- 84: Längsführung
- 85: Rollstabilisierung
- 86: ein Bauteil mit integrierter Längsführungs- Querführungs- und Rollstabilisierungs-Funktion
- L: Längsrichtung der Fahrzeugkonstruktion
- Q: Querrichtung der Fahrzeugkonstruktion
- H: Höhenrichtung der Fahrzeugkonstruktion

- 100: Fahrzeugkonstruktion

## Patentansprüche

1. Fahrzeugkonstruktion (100), mit zumindest einer Fahrzeug-Achsen-Tragstruktur (T4), die ein Fahrzeug-Chassis-Modul bildet und eine Fahrzeug-Achse (41, 42) aufweist, wobei die Fahrzeug-Achsen-Tragstruktur (T4) zumindest zwei vordere Anschlussknoten (K4) und zumindest zwei hintere Anschlussknoten (K4) aufweist, wobei die Fahrzeug-Achsen-Tragstruktur (T4) vier oberen Anschlussknoten umfasst,
und wobei die Fahrzeug-Achsen-Tragstruktur (T4) zumindest eine der folgenden Funktionskomponenten, insbesondere Fahrwerkskomponenten, aufweist:
- eine Lifteinrichtung (83) zum Anheben und Absenken der Fahrzeug-Achse,
- zumindest eine Rollstabilisierung (85), und/oder
- ein Bauteil (86) mit integrierter Längsführungs- Querführungs- und Rollstabilisierungs-Funktion,
**dadurch gekennzeichnet, dass** an die vier oberen Anschlussknoten (K4) der Fahrzeug-Achsen-Tragstruktur (T4) jeweils ein Längsträgersegment (4.1, 4.3) und ein Vertikalträgersegment (4.9-4.12) der Fahrzeug-Achsen-Tragstruktur (T4) angebunden ist.

2. Fahrzeugkonstruktion (100) nach Anspruch 1, **dadurch gekennzeichnet, dass** die Fahrzeug-Achsen-Tragstruktur (T4) vier vordere Anschlussknoten (K4) und vorzugsweise vier hintere Anschlussknoten (K4) aufweist.

3. Fahrzeugkonstruktion (100) nach Anspruch 2, **dadurch gekennzeichnet, dass** die vier vorderen Anschlussknoten (K4) und die vier hinteren Anschlussknoten (K4) Eckpunkte eines fiktiven Quaders bilden und/oder gleich weit von einem Raummittelpunkt entfernt sind.

4. Fahrzeugkonstruktion (100) nach einem der vorhergehenden Ansprüche, **dadurch gekennzeichnet, dass** die Fahrzeug-Achse (41, 42) sich abschnittsweise innerhalb der Fahrzeug-Achsen-Tragstruktur (T4) erstreckt.

5. Fahrzeugkonstruktion (100) nach einem der Ansprüche 2 bis 4, **dadurch gekennzeichnet, dass** die vier vorderen Anschlussknoten (K4) und die vier hinteren Anschlussknoten (K4) baugleich ausgebildet sind und/oder die Fahrzeug-Achsen-Tragstruktur (T4) in Höhenrichtung (H) der Fahrzeugkonstruktion (100) um 180° gedreht an oder in die Fahrzeugkonstruktion (100) montierbar ist.

6. Fahrzeugkonstruktion (100) nach einem der vorhergehenden Ansprüche, **dadurch gekennzeichnet, dass** die Fahrzeug-Achsen-Tragstruktur (T4) ferner zumindest eine der folgenden Funktionskomponenten, insbesondere Fahrwerkskomponenten, aufweist:
- eine Längs- und Querführung (80),
- eine Federungs- und/oder Dämpfungseinrichtung (81, 82), und/oder
- eine Längsführung (84).

7. Fahrzeugkonstruktion (100) nach einem der vorhergehenden Ansprüche, **dadurch gekennzeichnet, dass** die zumindest eine Funktionskomponente an die Fahrzeug-Achsen-Tragstruktur (T4) montiert ist und/oder innerhalb der Fahrzeug-Achsen-Tragstruktur (T4) angeordnet ist.

8. Fahrzeugkonstruktion (100) nach einem der vorhergehenden Ansprüche, **dadurch gekennzeichnet, dass** die Fahrzeug-Achsen-Tragstruktur (T4) zumindest zwei Längsträgersegmente (4.1-4.4) aufweist, die im Wesentlichen in Querrichtung (Q) der Fahrzeugkonstruktion (100) voneinander beabstandet sind und die jeweils eine vordere in Längsrichtung wirkende Versteifungsstruktur (4.13) und eine hintere in Längsrichtung wirkende Versteifungsstruktur (4.13) aufweisen.

9. Fahrzeugkonstruktion (100) nach einem der vorhergehenden Ansprüche, **dadurch gekennzeichnet, dass** die Fahrzeug-Achsen-Tragstruktur (T4)
- zumindest ein Querträgersegment (4Q) umfasst, das an Längsträgersegmente (4.1-4.4) der Fahrzeug-Achsen-Tragstruktur (T4) montiert ist,
- zumindest ein Querträgersegment (4Q) umfasst, das an Vertikalträgersegmente (4.9-4.12) der Fahrzeug-Achsen-Tragstruktur (T4) montiert ist, und/oder
- zumindest ein Querträgersegment (4Q) umfasst, das an Anschlussknoten (K4) der Fahrzeug-Achsen-Tragstruktur (T4) montiert ist.

10. Fahrzeugkonstruktion (100) nach einem der vorhergehenden Ansprüche, **dadurch gekennzeichnet, dass** Längsträgersegmente (4.1, 4.3) der Fahrzeug-Achsen-Tragstruktur (T4) die Fahrzeug-Achse (41, 42) oben überspannen und/oder die Fahrzeug-Achsen-Tragstruktur (T4) unter der Fahrzeug-Achse (41, 42) kein Längsträgersegment aufweist.

11. Fahrzeugkonstruktion (100) nach einem der vorhergehenden Ansprüche, **dadurch gekennzeichnet, dass** die Fahrzeug-Achsen-Tragstruktur (T4) nur eine einzige Fahrzeug-Achse (41, 42) oder zumindest zwei Fahrzeug-Achsen (41, 42) aufweist.

12. Fahrzeugkonstruktion (100) nach einem der vorhergehenden Ansprüche, **dadurch gekennzeichnet, dass** die Anschlussknoten (K4) der Fahrzeug-Achsen-Tragstruktur (T4) zur Übertragung von Zug- und/oder Druckkräften in Längsrichtung (L) der Fahrzeugkonstruktion (100) dienen.

13. Fahrzeugkonstruktion (100) nach einem der vorhergehenden Ansprüche, **dadurch gekennzeichnet, dass** die Fahrzeugkonstruktion (100) einen hinteren Rahmenüberhang (F) hinter der Fahrzeug-Achsen-Tragstruktur (T4) aufweist.

14. Fahrzeugkonstruktion (100) nach Anspruch 13, **dadurch gekennzeichnet, dass** der Rahmenüberhang (F) als Leiterrahmen mit zwei Längsträgern (50, 51) ausgebildet ist und über zwei Konsolen (60, 61) mit der Fahrzeug-Achsen-Tragstruktur (T4) verbunden ist, wobei die zwei Konsolen (60, 61) jeweils zumindest einen, vorzugsweise jeweils zwei, Anschlussknoten (K) aufweisen, über die sie mit den zumindest zwei, vorzugsweise vier, hinteren Anschlussknoten (K4) der Fahrzeug-Achsen-Tragstruktur (T4) lösbar verbunden sind.

15. Fahrzeugkonstruktion (100) nach Anspruch 13, **dadurch gekennzeichnet, dass** der Rahmenüberhang (F) als eine ein Fahrzeug-Chassis-Modul bildende Tragstruktur mit vier vorderen Anschlussknoten ausgebildet ist, die mit den vier hinteren Anschlussknoten (K4) der Fahrzeug-Achsen-Tragstruktur (T4) lösbar verbunden sind.

16. Fahrzeugkonstruktion (100) nach einem der vorhergehenden Ansprüche, **dadurch gekennzeichnet, dass** die Fahrzeugkonstruktion (100) eine Vielzahl von Tragstrukturen (T4, T3, T2, T1) umfasst, die jeweils ein Fahrzeug-Chassis-Modul bilden, die jeweils mehrere Anschlussknoten (K4, K3, K2, K1) aufweisen und die jeweils über, vorzugsweise vier, Anschlussknoten-Paare (K4-K3, K3-K2, K2-K2, K2-K1) lösbar miteinander verbunden sind.

17. Fahrzeugkonstruktion (100) nach einem der vorhergehenden Ansprüche, **dadurch gekennzeichnet, dass**
- die Fahrzeug-Achse (41, 42) als Triebachse (41) oder Laufachse (42) ausgebildet ist,
- die Fahrzeugkonstruktion (100) eine erste Fahrzeug-Achsen-Tragstruktur (T4) mit einer Triebachse (41) aufweist und eine zweite Fahrzeug-Achsen-Tragstruktur (T4) mit einer Vorlauf- oder Nachlaufachse (42) aufweist, und/oder
- zwischen einer eine Vorderachse (40) aufweisenden Tragstruktur (T1) und der Fahrzeug-Achsen-Tragstruktur (T4) zumindest eine weitere ein Fahrzeug-Chassis-Modul bildende Tragstruktur (T2, T3) angeordnet ist.

18. Fahrzeugkonstruktion (100) nach einem der vorhergehenden Ansprüche, **dadurch gekennzeichnet, dass** die Fahrzeug-Achsen-Tragstruktur (T4) mehrere Vertikalträgersegmente (4.9-4.12), mehrere Querträgersegmente (4Q) und beidseitig zumindest ein Längsträgersegment (4.1-4.4), vorzugsweise zwei im Wesentlichen in Höhenrichtung (H) der Fahrzeugkonstruktion (100) voneinander beabstandete Längsträgersegmente (4.1-4.4) aufweist.

19. Fahrzeugkonstruktion (100) nach einem der vorhergehenden Ansprüche, **dadurch gekennzeichnet, dass**
- die Vertikalträgersegmente (4.1-4.3), die Querträgersegmente (4Q) und/oder die Längsträgersegmente (4.1-4.4) zumindest abschnittsweise als Blech- oder Profilbauteile ausgebildet sind, und/oder
- die Anschlussknoten (K4) als Guss-, Schmiede- oder Blechbauteil ausgebildet sind.

20. Fahrzeugkonstruktion (100) nach einem der vorhergehenden Ansprüche, **dadurch gekennzeichnet, dass** zumindest zwei Anschlussknoten (K4) der Fahrzeug-Achsen-Tragstruktur (T4) jeweils eine Verbindungskonstruktion zur lösbaren Verbindung mit benachbarten Anschlussknoten (K, K3, K2) umfassen und die Verbindungskonstruktion zumindest ein im Wesentlichen in Querrichtung (Q) der Fahrzeugkonstruktion (100) erstreckendes Spannelement (12, A12) umfasst.

21. Fahrzeugkonstruktion (100) nach Anspruch 20, **dadurch gekennzeichnet, dass** die Verbindungskonstruktion eine Klemmverbindung mit zwei Klemmbacken (10, 11) und zumindest einem Spannelement (12) zum Zusammenspannen der zwei Klemmbacken (10, 11) und somit benachbarter Anschlussknoten (K-K4, K4-K3, K4-K2) aufweist.

22. Fahrzeugkonstruktion (100) nach Anspruch 20 oder 21, **dadurch gekennzeichnet, dass** die Verbindungskonstruktion eine Laschen-Spannelement-Verbindung (A10, A11, A12) mit einem Spannelement (A12) umfasst und das Spannelement (A12) dazu dient, sich durch Laschen (A10, A11) der Laschen-Spannelement-Verbindung (A10, A11, A12) zu erstrecken, vorzugsweise um die Laschen (A10, A11) miteinander zu verbinden und/oder gegeneinander zu verspannen.

23. Fahrzeugkonstruktion (100) nach einem der vorhergehenden Ansprüche, **dadurch gekennzeichnet, dass** zwischen der Fahrzeug-Achsen-Tragstruktur (T4) und bewegten Fahrwerksteilen nur einseitig bewegte Bauteile angeordnet sind und/oder kein Zwischenhalter oder Bauteil zum Zweck der Verbindung zwischen der Fahrzeug-Achsen-Tragstruktur (T4) und bewegten Fahrwerksteilen.

24. Nutzfahrzeug, vorzugsweise Lastkraftwagen, mit einer Fahrzeugkonstruktion (100) nach einem der vorhergehenden Ansprüche.

## Claims

1. A vehicle structure (100), comprising at least one vehicle axle support structure (T4) forming a vehicle chassis module and comprising a vehicle axle (41, 42), wherein the vehicle axle support structure (T4) comprises at least two front connection nodes (K4) and at least two rear connection nodes (K4), wherein the vehicle axle support structure (T4) comprises four upper connection nodes, and wherein the vehicle axle support structure (T4) comprises at least one of the following functional components, in particular under-carriage components:
- a lifting device (83) for raising and lowering the vehicle axle,
- at least one roll stabilizer (85), and/or
- a component (86) with integrated longitudinal guiding function, transverse guiding function and roll stabilization function,
**characterized in that** a longitudinal support segment (4.1, 4.3) and a vertical support segment (4.9-4.12) of the vehicle axle support structure (T4) is respectively connected to the four upper connection nodes (K4) of the vehicle axle support structure (T4).

2. Vehicle structure (100) according to claim 1, **characterized in that** the vehicle axle support structure (T4) comprises four front connection nodes (K4) and preferably four rear connection nodes (K4).

3. Vehicle structure (100) according to claim 2, **characterized in that** the four front connection nodes (K4) and the four rear connection nodes (K4) form corner points of a virtual cuboid and/or are equally distanced from a spatial central point.

4. Vehicle structure (100) according to any one of the preceding claims, **characterized in that** the vehicle axle (41, 42) extends partially within the vehicle axle support structure (T4).

5. Vehicle structure (100) according to any one of claims 2 to 4, **characterized in that** the four front connection nodes (K4) and the four rear connection nodes (K4) are of identical structure and/or the vehicle axle support structure (T4) is mountable in the height direction (H) of the vehicle structure (100) rotated by 180° on or in the vehicle structure (100).

6. Vehicle structure (100) according to any one of the preceding claims, **characterized in that** the vehicle axle support structure (T4) further comprises at least one of the following functional components, in particular under-carriage components:
- a longitudinal and transverse guidance (80),
- a suspension and/or damping device (81, 82), and/or
- a longitudinal guidance (84).

7. Vehicle structure (100) according to any one of the preceding claims, **characterized in that** the at least one functional component is mounted to the vehicle axle support structure (T4) and/or is arranged within the vehicle axle support structure (T4).

8. Vehicle structure (100) according to any one of the preceding claims, **characterized in that** the vehicle axle support structure (T4) comprises at least two longitudinal support segments (4.1-4.4) which are spaced apart from one another substantially in the transverse direction (Q) of the vehicle structure (100) and which respectively comprise a front stiffening structure (4.13) acting in the longitudinal direction and a rear stiffening structure (4.13) acting in the longitudinal direction.

9. Vehicle structure (100) according to any one of the preceding claims, **characterized in that** the vehicle axle support structure (T4)
- comprises at least one transverse support segment (4Q) mounted on longitudinal support segments (4.1-4.4) of the vehicle axle support structure (T4),
- comprises at least one transverse support segment (4Q) mounted on vertical support segments (4.9-4.12) of the vehicle axle support structure (T4), and/or
- comprises at least one transverse support segment (4Q) mounted on connection nodes (K4) of the vehicle axle support structure (T4).

10. Vehicle structure (100) according to any one of the preceding claims, **characterized in that** longitudinal support segments (4.1, 4.3) of the vehicle axle support structure (T4) span the vehicle axle (41, 42) above and/or the vehicle axle support structure (T4) does not comprise a longitudinal support segment below the vehicle axle (41, 42).

11. Vehicle structure (100) according to any one of the preceding claims, **characterized in that** the vehicle axle support structure (T4) comprises only a single vehicle axle (41, 42) or at least two vehicle axles (41, 42).

12. Vehicle structure (100) according to any one of the preceding claims, **characterized in that** the connection nodes (K4) of the vehicle axle support structure (T4) act to transmit tensile and/or pressure forces in the longitudinal direction (L) of the vehicle structure (100).

13. Vehicle structure (100) according to any one of the preceding claims, **characterized in that** the vehicle structure (100) comprises a rear frame overhang (F) behind the vehicle axle support structure (T4).

14. Vehicle structure (100) according to claim 13, **characterized in that** the frame overhang (F) is configured as a ladder frame with two longitudinal supports (50, 51) and is connected to the vehicle axle support structure (T4) via two consoles (60, 61), wherein the two consoles (60, 61) respectively comprise at least one, preferably respectively two, connection nodes (K), via which they are detachably connected to the at least two, preferably four, rear connection nodes (K4) of the vehicle axle support structure (T4).

15. Vehicle structure (100) according to claim 13, **characterized in that** the frame overhang (F) is configured as a vehicle chassis module forming support structure with four front connection nodes that are detachably connected to the four rear connection nodes (K4) of the vehicle axle support structure (T4).

16. Vehicle structure (100) according to any one of the preceding claims, **characterized in that** the vehicle structure (100) comprises a plurality of support structures (T4, T3, T2, T1), respectively forming a vehicle chassis module, respectively comprising a plurality of connection nodes (K4, K3, K2, K1) and respectively detachably connected to one another via, preferably four, pairs of connection nodes (K4-K3, K3-K2, K2-K2, K2-K1).

17. Vehicle structure (100) according to any one of the preceding claims, **characterized in that**
- the vehicle axle (41, 42) is formed as a drive axle (41) or a running axle (42),
- the vehicle structure (100) comprises a first vehicle axle support structure (T4) with a drive axle (41) and a second vehicle axle support structure (T4) with a leading or trailing axle (42), and/or
- at least one further support structure (T2, T3) forming a vehicle chassis module is arranged between a support structure (T1) comprising a front axle (40) and the vehicle axle support structure (T4).

18. Vehicle structure (100) according to any one of the preceding claims, **characterized in that** the vehicle axle support structure (T4) comprises a plurality of vertical support segments (4.9-4.12), a plurality of transverse support segments (4Q) and both-sided at least one longitudinal support segment (4.1-4.4), preferably two longitudinal support segments (4.1-4.4) spaced apart from each other substantially in the height direction (H) of the vehicle structure (100).

19. Vehicle structure (100) according to any one of the preceding claims, **characterized in that**
- the vertical support segments (4.1-4.3), the transverse support segments (4Q) and/or the longitudinal support segments (4.1-4.4) are formed at least in sections as sheet metal or profiled components, and/or
- the connecting nodes (K4) are formed as casted, forged or sheet metal component.

20. Vehicle structure (100) according to any one of the preceding claims, **characterized in that** at least two connecting nodes (K4) of the vehicle axle support structure (T4) respectively comprises a connecting structure in order to be detachably connectable to adjacent connecting nodes (K, K3, K2), and the connecting structure comprises at least one tensioning element (12, A12) extending substantially in the transverse direction (Q) of the vehicle structure (100).

21. Vehicle structure (100) according to claim 20, **characterized in that** the connecting structure comprises a clamping connection with two clamping brackets (10, 11) and at least one tensioning element (12) for clamping together the two clamping brackets (10, 11) and thus adjacent connecting nodes (K-K4, K4-K3, K4-K2).

22. Vehicle structure (100) according to claim 20 or 21, **characterized in that** the connecting structure comprises a tab-tensioning element connection (A10, A11, A12) with a tensioning element (A12), and the tensioning element (A12) serves to extend through tabs (A10, A11) of the tab-tensioning element connection (A10, A11, A12), preferably to connect the tabs (A10, A11) to each other and/or to tension them against each other.

23. Vehicle structure (100) according to any one of the preceding claims, **characterized in that** between the vehicle axle support structure (T4) and moving under-carriage parts only unilaterally moving components are arranged and/or no intermediate holder or component for the purpose of connection between the vehicle axle support structure (T4) and moving under-carriage parts.

24. A commercial vehicle, preferably a truck, comprising a vehicle structure (100) according to any one of the preceding claims.

## Revendications

1. Construction de véhicule (100), avec au moins une structure porteuse d'essieu de véhicule (T4), qui forme un module de châssis de véhicule et présente un essieu de véhicule (41, 42), la structure porteuse d'essieu de véhicule (T4) présentant au moins deux noeuds de raccordement avant (K4) et au moins deux noeuds de raccordement arrière (K4), la structure porteuse d'essieu de véhicule (T4) comprenant quatre noeuds de raccordement supérieurs, et la structure porteuse d'essieu de véhicule (T4) présentant au moins l'un des composants fonctionnels suivants, notamment des composants de châssis :
- un dispositif de levage (83) pour soulever et abaisser l'essieu de véhicule,
- au moins un stabilisateur de roulis (85), et/ou
- un composant (86) avec une fonction de guidage longitudinal, de guidage transversal et de stabilisateur de roulis intégrée,
**caractérisée en ce qu'**un segment de support longitudinal (4.1, 4.3) et un segment de support vertical (4.9-4.12) de la structure porteuse d'essieu de véhicule (T4) sont respectivement reliés aux quatre noeuds de raccordement supérieurs (K4) de la structure porteuse d'essieu de véhicule (T4).

2. Construction de véhicule (100) selon la revendication 1, **caractérisée en ce que** la structure porteuse d'essieu de véhicule (T4) présente quatre noeuds de raccordement avant (K4) et de préférence quatre noeuds de raccordement arrière (K4).

3. Construction de véhicule (100) selon la revendication 2, **caractérisée en ce que** les quatre noeuds de raccordement avant (K4) et les quatre noeuds de raccordement arrière (K4) forment les sommets d'un parallélépipède fictif et/ou sont équidistants d'un centre de l'espace.

4. Construction de véhicule (100) selon l'une quelconque des revendications précédentes, **caractérisée en ce que** l'essieu de véhicule (41, 42) s'étend par sections à l'intérieur de la structure porteuse d'essieu de véhicule (T4).

5. Construction de véhicule (100) selon l'une quelconque des revendications 2 à 4, **caractérisée en ce que** les quatre noeuds de raccordement avant (K4) et les quatre noeuds de raccordement arrière (K4) sont réalisés de construction identique et/ou la structure porteuse d'essieu de véhicule (T4) peut être montée sur ou dans la construction de véhicule (100) en étant tournée de 180° dans la direction de la hauteur (H) de la construction de véhicule (100).

6. Construction de véhicule (100) selon l'une quelconque des revendications précédentes, **caractérisée en ce que** la structure porteuse d'essieu de véhicule (T4) présente en outre au moins l'un des composants fonctionnels suivants, notamment des composants de châssis :
- un guidage longitudinal et transversal (80),
- un dispositif de suspension et/ou d'amortissement (81, 82), et/ou
- un guidage longitudinal (84).

7. Construction de véhicule (100) selon l'une quelconque des revendications précédentes, **caractérisée en ce que** l'au moins un composant fonctionnel est monté sur la structure porteuse d'essieu de véhicule (T4) et/ou est agencé à l'intérieur de la structure porteuse d'essieu de véhicule (T4).

8. Construction de véhicule (100) selon l'une quelconque des revendications précédentes, **caractérisée en ce que** la structure porteuse d'essieu de véhicule (T4) présente au moins deux segments de support longitudinaux (4.1-4.4) qui sont espacés l'un de l'autre essentiellement dans la direction transversale (Q) de la construction de véhicule (100) et qui présentent chacun une structure de renforcement avant (4.13) agissant dans la direction longitudinale et une structure de renforcement arrière (4.13) agissant dans la direction longitudinale.

9. Construction de véhicule (100) selon l'une quelconque des revendications précédentes, **caractérisée en ce que** la structure porteuse d'essieu de véhicule (T4)
- comprend au moins un segment de support transversal (4Q) qui est monté sur des segments de support longitudinaux (4.1-4.4) de la structure porteuse d'essieu de véhicule (T4),
- comprend au moins un segment de support transversal (4Q) qui est monté sur des segments de support verticaux (4.9-4.12) de la structure porteuse d'essieu de véhicule (T4), et/ou
- comprend au moins un segment de support transversal (4Q) qui est monté sur des noeuds de raccordement (K4) de la structure porteuse d'essieu de véhicule (T4).

10. Construction de véhicule (100) selon l'une quelconque des revendications précédentes, **caractérisée en ce que** des segments de support longitudinaux (4.1, 4.3) de la structure porteuse d'essieu de véhicule (T4) s'étendent au-dessus de l'essieu de véhicule (41, 42) et/ou la structure porteuse d'essieu de véhicule (T4) ne présente pas de segment de support longitudinal sous l'essieu de véhicule (41, 42).

11. Construction de véhicule (100) selon l'une quelconque des revendications précédentes, **caractérisée en ce que** la structure porteuse d'essieu de véhicule (T4) ne présente qu'un seul essieu de véhicule (41, 42) ou présente au moins deux essieux de véhicule (41, 42).

12. Construction de véhicule (100) selon l'une quelconque des revendications précédentes, **caractérisée en ce que** les noeuds de raccordement (K4) de la structure porteuse d'essieu de véhicule (T4) servent à transmettre des forces de traction et/ou de compression dans la direction longitudinale (L) de la construction de véhicule (100).

13. Construction de véhicule (100) selon l'une quelconque des revendications précédentes, **caractérisée en ce que** la construction de véhicule (100) présente un surplomb de cadre arrière (F) derrière la structure porteuse d'essieu de véhicule (T4).

14. Construction de véhicule (100) selon la revendication 13, **caractérisée en ce que** le surplomb de cadre (F) est réalisé sous forme de cadre conducteur avec deux supports longitudinaux (50, 51) et est relié à la structure porteuse d'essieu de véhicule (T4) par l'intermédiaire de deux consoles (60, 61), les deux consoles (60, 61) présentant chacune au moins un, de préférence deux, noeuds de raccordement (K) par l'intermédiaire desquels elles sont reliées de manière amovible aux au moins deux, de préférence quatre, noeuds de raccordement arrière (K4) de la structure porteuse d'essieu de véhicule (T4).

15. Construction de véhicule (100) selon la revendication 13, **caractérisée en ce que** le surplomb de cadre (F) est réalisé sous la forme d'une structure porteuse formant un module de châssis de véhicule avec quatre noeuds de raccordement avant qui sont reliés de manière amovible aux quatre noeuds de raccordement arrière (K4) de la structure porteuse d'essieu de véhicule (T4).

16. Construction de véhicule (100) selon l'une quelconque des revendications précédentes, **caractérisée en ce que** la construction de véhicule (100) comprend une pluralité de structures porteuses (T4, T3, T2, T1) qui forment chacune un module de châssis de véhicule, qui présentent chacune plusieurs noeuds de raccordement (K4, K3, K2, K1) et qui sont reliées entre elles de manière amovible par l'intermédiaire de paires de noeuds de raccordement (K4-K3, K3-K2, K2-K2, K2-K1), de préférence quatre.

17. Construction de véhicule (100) selon l'une quelconque des revendications précédentes, **caractérisée en ce que**
- l'essieu de véhicule (41, 42) est réalisé sous forme d'essieu moteur (41) ou d'essieu porteur (42),
- la construction de véhicule (100) présente une première structure porteuse d'essieu de véhicule (T4) avec un essieu moteur (41) et une deuxième structure porteuse d'essieu de véhicule (T4) avec un essieu porteur avant ou porteur arrière (42), et/ou
- entre une structure porteuse (T1) présentant un essieu avant (40) et la structure porteuse d'essieu de véhicule (T4) est agencée au moins une autre structure porteuse (T2, T3) formant un module de châssis de véhicule.

18. Construction de véhicule (100) selon l'une quelconque des revendications précédentes, **caractérisée en ce que** la structure porteuse d'essieu de véhicule (T4) présente plusieurs segments de support verticaux (4.9-4.12), plusieurs segments de support transversaux (4Q) et, des deux côtés, au moins un segment de support longitudinal (4.1-4.4), de préférence deux segments de support longitudinaux (4.1-4.4) espacés l'un de l'autre essentiellement dans la direction de la hauteur (H) de la construction de véhicule (100).

19. Construction de véhicule (100) selon l'une quelconque des revendications précédentes, **caractérisée en ce que**
- les segments de support verticaux (4.1-4.3), les segments de support transversaux (4Q) et/ou les segments de support longitudinaux (4.1-4.4) sont réalisés au moins par sections sous forme de composants en tôle ou profilés, et/ou
- les noeuds de raccordement (K4) sont réalisés sous forme de composants coulés, forgés ou en tôle.

20. Construction de véhicule (100) selon l'une quelconque des revendications précédentes, **caractérisée en ce qu'**au moins deux noeuds de raccordement (K4) de la structure porteuse d'essieu de véhicule (T4) comprennent chacun une construction de liaison pour la liaison amovible à des noeuds de raccordement voisins (K, K3, K2) et la construction de liaison comprend au moins un élément de serrage (12, A12) s'étendant essentiellement dans la direction transversale (Q) de la construction de véhicule (100).

21. Construction de véhicule (100) selon la revendication 20, **caractérisée en ce que** la construction de liaison présente une liaison de serrage avec deux mâchoires de serrage (10, 11) et au moins un élément de serrage (12) pour serrer ensemble les deux mâchoires de serrage (10, 11) et ainsi des noeuds de raccordement voisins (K-K4, K4-K3, K4-K2).

22. Construction de véhicule (100) selon la revendication 20 ou 21, **caractérisée en ce que** la construction de liaison comprend une liaison pattes-élément de serrage (A10, A11, A12) avec un élément de serrage (A12) et l'élément de serrage (A12) sert à s'étendre à travers des pattes (A10, A11) de la raccordement pattes-élément de serrage (A10, A11, A12), de préférence pour relier les pattes (A10, A11) entre elles et/ou pour les serrer l'une contre l'autre.

23. Construction de véhicule (100) selon l'une quelconque des revendications précédentes, **caractérisée en ce que** des composants mobiles ne sont agencés que d'un côté entre la structure porteuse d'essieu de véhicule (T4) et des pièces de châssis mobiles, et/ou il n'y a pas de soutien intermédiaire ou de composant pour la liaison entre la structure porteuse d'essieu de véhicule (T4) et des pièces de châssis mobiles.

24. Véhicule utilitaire, de préférence camion, avec une construction de véhicule (100) selon l'une quelconque des revendications précédentes.
